# EUROPEAN PATENT APPLICATION

(11) **EP 2 270 715 A2**
(43) Date of publication of application: **05.01.2011**
(21) Application number: 10167931.4
(22) Date of filing: 30.06.2010
(51) Int. Cl.: G06K 9/22, G06K 9/00

(54) **Method and system for collecting voice and image data on a remote device and converting the combined data**

(30) Priority: 01.07.2009 US 222288 P; 29.06.2010 US 825934
(71) Applicant: Hand Held Products, Inc., Skaneateles Falls, New York 13153-0208 (US)
(72) Inventor: Franklin, Richard Loy, Harrisburg, NC 28075 (US); Pittinelli, John, Camillus, NY 13031 (US); Powilleit, Sven, Edmonds, WA 98026-4118 (US)
(74) Representative: Buckley, Guy Julian

(57) **Abstract**

A system and method to capture and analyze image data of an object, the system including: an end unit to capture the image data, the end unit including: an image capturing unit to capture the image data of the object, and a transmitting unit to transmit the captured image data; and a data analysis server to analyze the image data, the data analysis server including: a receiving unit to receive the transmitted image data, and a control unit to analyze the received image data by performing one or more machine vision functions on the received image data, and to control a transmitting of a result of the one or more machine vision functions to the end unit and/or a performing of a function according to the result of the one or more machine vision functions. Accordingly, complex image data of an object can be collected by a remote image capturing device in order to identify the object by analyzing the image data in a separate server.

## Description

### BACKGROUND OF THE INVENTION

### 1. Field of the Invention

Aspects of the present invention relate to a system to capture and analyze image data of an object and a method thereof, and more particularly, to a system to capture image data at an end device and to analyze the captured image data in a server to thereafter perform a function or return an analysis result to the end unit and a method thereof.

### 2. Description of the Related Art

Conventionally, a barcode reader scans an image to generate digital data therefrom. Specifically, the conventional barcode reader includes a light source, a lens, a photodetector, a decoder, and an output unit. The light source outputs a light (such as a laser beam) through the lens and onto the image (i.e., a barcode). The barcode includes dark bars of different thicknesses and white spaces also having different thicknesses between the dark bars. While the dark bars absorb the light, the white spaces reflect the light to the photodetector (such as a photodiode). The photodetector measures the intensity of the light reflected back from the barcode to generate a waveform that represents the bar and space pattern of the barcode. The decoder then analyzes the generated waveform and converts the waveform into digital data. The output unit connects to a computer and transmits the data to the computer. Accordingly, different objects (for example, products in a store) can be identified by their corresponding barcodes using the barcode reader.

As described above, the image data collected by the barcode reader is limited to a series of dark bars and white spaces. In particular, the conventional barcode reader is unable to analyze and digitize more complex image data, as this would require more complex vision functions and image analysis. Generally, conventional mobile devices (including barcode readers) do not perform these sophisticated machine vision and image analysis functions because such functions are processor intensive. Therefore, there is a need for a system of collecting and converting more complex image data.

### SUMMARY OF THE INVENTION

Aspects of the present invention provide a system to capture image data at an end unit, and to analyze the captured image data in a server to thereafter perform a function or return an analysis result to the end unit.

According to an aspect of the present invention, there is provided a system to capture and analyze image data of an object, the system including: an end unit to capture the image data, the end unit including: an image capturing unit to capture the image data of the object, and a transmitting unit to transmit the captured image data; and a data analysis server to analyze the image data, the data analysis server including: a receiving unit to receive the transmitted image data, and a control unit to analyze the received image data by performing one or more machine vision functions on the received image data, and to control a transmitting of a result of the one or more machine vision functions to the end unit and/or a performing of a function according to the result of the one or more machine vision functions.

According to another aspect of the present invention, there is provided a method of capturing and analyzing image data of an object, the method including: capturing the image data of the object in an end unit; transmitting the captured image data from the end unit to a data analysis server; analyzing the transmitted image data in the data analysis server by performing one or more machine vision functions on the transmitted image data; and transmitting a result of the one or more machine vision functions to the end unit and/or performing a function according to the result of the one or more machine vision functions.

According to still another aspect of the present invention, there is provided a mobile device of a system including a data analysis server that performs one or more machine vision functions on received image data, the mobile device including: an image capturing unit to capture image data of an object; and a transmitting unit to transmit the captured image data to the data analysis server, wherein the data analysis server analyzes the captured image data by performing the one or more machine vision functions thereon and transmits a result of the one or more machine vision functions to the mobile device and/or performs a function according to the result of the one or more machine vision functions.

According to yet another aspect of the present invention, there is provided a data analysis server to analyze image data of an object captured by a mobile device, the data analysis server including: a receiving unit to receive the image data from the mobile device; and a control unit to analyze the received image data by performing one or more machine vision functions on the received image data, and to control a transmitting of a result of the one or more machine vision functions to the mobile device and/or a performing of a function according to the result of the one or more machine vision functions.

According to another aspect of the present invention, there is provided a method of analyzing image data of an object captured by a mobile device, the method including: receiving the image data from the mobile device; analyzing the received image data by performing one or more machine vision functions on the received image data; and transmitting a result of the one or more machine vision functions to the mobile device and/or performing a function according to the result of the one or more machine vision functions.

According to still another aspect of the present invention, there is provided a computer readable recording medium encoded with the method and implemented by a computer.

Additional aspects and/or advantages of the invention will be set forth in part in the description which follows and, in part, will be obvious from the description, or may be learned by practice of the invention.

### BRIEF DESCRIPTION OF THE DRAWINGS

These and/or other aspects and advantages of the invention will become apparent and more readily appreciated from the following description of the embodiments, taken in conjunction with the accompanying drawings of which:
FIG. 1 is a block diagram of a system to collect and to analyze image data according to an embodiment of the present invention;
FIG. 2 is a block diagram of the remote device according to an embodiment of the present invention;
FIG. 3 is a block diagram of the remote device according to another embodiment of the present invention;
FIG. 4 is a block diagram of the data analysis server 120 according to an embodiment of the present invention;
FIG. 5 is a flowchart illustrating a method of collecting and analyzing image data according to an embodiment of the present invention;
FIG. 6 is a flowchart illustrating a method of collecting and analyzing image data and voice data according to an embodiment of the present invention;
FIG. 7 is a flowchart illustrating a method of analyzing image data according to an embodiment of the present invention;
FIGs. 8A and 8B illustrate a portable data terminal according to an embodiment of the present invention; and
FIGs. 9A and 9B illustrate a handheld bar code scanner according to an embodiment of the present invention.

### DETAILED DESCRIPTION OF THE EMBODIMENTS

Reference will now be made in detail to the present embodiments of the present invention, examples of which are illustrated in the accompanying drawings, wherein like reference numerals refer to the like elements throughout. The embodiments are described below in order to explain the present invention by referring to the figures.

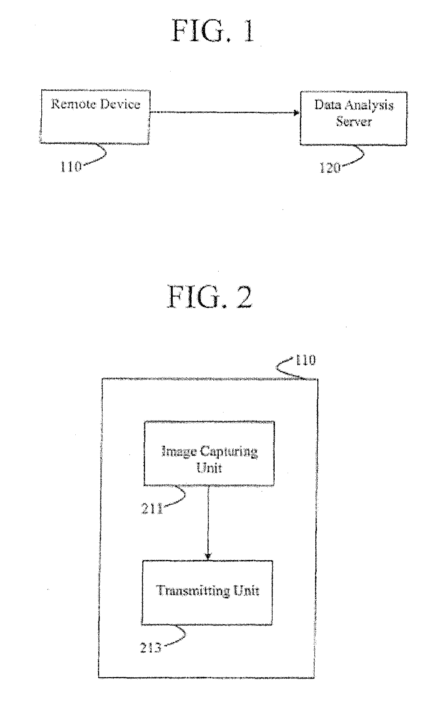

FIG. 1 is a block diagram of a system to collect and to analyze image data according to an embodiment of the present invention. Referring to FIG. 1, the system includes a remote device 110 and a data analysis server 120.

The remote device 110 captures an image of an object, and transmits corresponding image data to the data analysis server 120. The data analysis server 120 analyzes the image data to identify the object. The remote device 110 can be any device that can capture an image and transmit data (such as a barcode scanner and a personal digital assistant (PDA), a mobile phone, and a portable data terminal (PDT) with a camera function). Furthermore, the remote device 110 can be a transmission-enabled imager (such as a Bluetooth imager) that captures an image and transmits the image locally to an intermediary device. The intermediary device then transmits the image data to the data analysis server 120 to be analyzed. For example, the intermediary device may be a desktop computer, a notebook computer, or a mobile phone that includes a web browser through which the image data is submitted via the Internet to a web server that is the data analysis server 120. The image data may be a simple barcode, a more complex two-dimensional image, or a three-dimensional image.

FIG. 2 is a block diagram of the remote device 110 according to an embodiment of the present invention. Referring to FIG. 2, the remote device 110 includes an image capturing unit 211 and a transmitting unit 213.

The image capturing unit 211 captures an image of an object. Specifically, the image capturing unit 211 may capture one image, a plurality of images, or video of the object. Where a plurality of images are captured, different angles of the object may be captured in each image or a similar angle may be captured in each image so that, for example, the data analysis server 120 can choose an image with a best lighting or quality to analyze. The image capturing unit 211 may be activated to capture the image by manipulation of one or more input devices (such as a button, a rotating dial, and/or a touch screen). As described above, according to other aspects, the image capturing unit 211 may be a stand-alone device that captures the image (or images) and transmits the corresponding image data locally to a separate transmitting unit 213. The stand-alone image capturing unit 211 may transmit the data via local wired (UART, IEEE 802.3, USB, RS-232, etc.) and/or wireless (IEEE 802.11, infrared, Bluetooth, etc.) transmission methods.

The transmitting unit 213 transmits the image data (which may correspond to a single image, a plurality of images, or video) to the data analysis server 120 via wired (IEEE 802.3, USB, RS-232, etc.) and/or wireless (IEEE 802.11, infrared, Bluetooth, GSM, GRPS, EDGE, CDMA, etc.) transmission methods. For example, the transmitting unit 213 may transmit the image data using a web browser connected to the Internet. In this case, the data analysis server 120 may be a web server. Furthermore, the transmitting unit 213 may transmit the image data in a data packet through a GSM network or in a Multimedia Messaging Service (MMS)-type message.

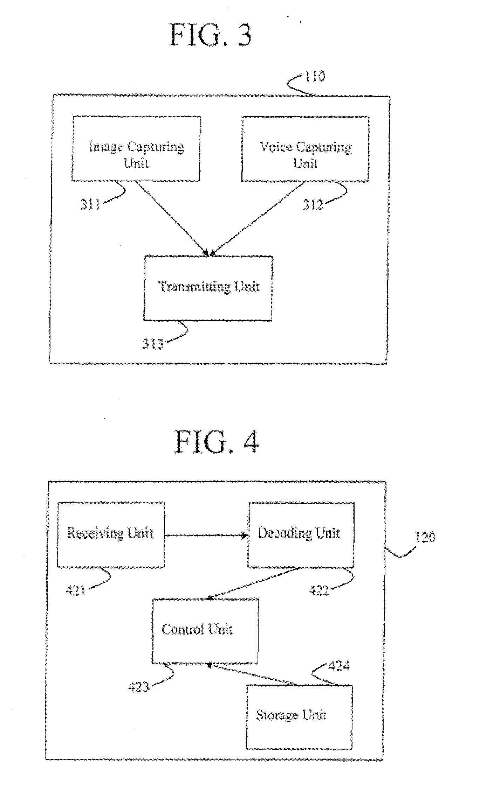

FIG. 3 is a block diagram of the remote device 110 according to another embodiment of the present invention. Referring to FIG. 3, the remote device 110 includes an image capturing unit 311, a voice capturing unit 312, and a transmitting unit 313. The image capturing unit 311 is similar to the image capturing unit 211 described with reference to FIG. 2, and a detailed description thereof will not be repeated here.

The voice capturing unit 312 captures voice data that is transmitted with the image data to the data analysis server 120 to be analyzed. For example, where the remote device 110 is used to create a customer order for a product, the voice data may include a customer identity, a quantity of the product, and/or a quality of the product. In this case, if customer Bob places an order for three yellow widgets, the voice capturing unit 312 can be activated to capture, "Customer Bob, order three, color yellow," and the image capturing unit 311 can be activated to capture image data, as described with reference to FIG. 2, of the widget. While not limited to all aspects, according to some aspects of the present invention, the image capturing unit 311 can be voice activated. In this case applied to the above example, the voice capturing unit 312 can be activated to capture, "Customer Bob, order three scan, color yellow" (emphasis added). Upon capturing the *"scan"* voice data, the voice capturing unit 312 triggers the image capturing unit 311 to take a picture (i.e., capture an image) of the product (i.e., the object). As described above, the image capturing unit 311 may capture one image, a plurality of images, or video of the object.

The transmitting unit 313 transmits the image data and the voice data to the data analysis server 120. The transmitting unit 313 may package the image data and voice data together and/or transmit the image data and the voice data simultaneously, or the transmitting unit 313 may transmit the image data and the voice data separately (for example, in separate data packets, and/or subsequently).

FIG. 4 is a block diagram of the data analysis server 120 according to an embodiment of the present invention. Referring to FIG. 4, the data analysis server 120 includes a receiving unit 421, a decoding unit 422, a control unit 423, and a storage unit 424.

The receiving unit 421 receives the image data and the decoding unit 422 decodes the image data. The receiving unit 421 may receive the data through the Internet, a wired or wireless network, a GSM network, and/or a GPS network. The control unit 423 then analyzes the image data and performs machine vision functions (such as barcode reading, optical character recognition, dimensioning, etc.) thereon. For example, the decoding unit 422 may decode and convert the image data to machine language, and the control unit 423 may then compare the converted data against a reference database to identify an object in the corresponding image. The storage unit 424 stores the reference database. The storage unit may be a volatile memory (such as random access memory (RAM)) or a non-volatile memory (such as read-only memory (ROM), flash memory, or a hard disk drive). The reference database may include a plurality of reference images such that the control unit 423 compares the received image to each of the reference images until the received image is identified against a reference image. Specifically, the control unit 423 may compare the received image against the reference database until the received image matches a reference image, or reference points (e.g., feature points) of the received image match reference points of a reference image. For each reference image, the reference database may include an identifier of the corresponding object, and additional information (such as dimensions and a cost of the object).

It is understood that in other embodiments, the storage unit 424 and/or reference database may be omitted. For example, the control unit 423 may alternatively run an algorithm on the image data in order to analyze the image data and return an identifier of the corresponding object and/or dimensions of the object. Once the image data has been analyzed, the control unit 423 can perform additional functions, such as creating an order for the identified object or transmitting the identifier and/or additional information of the object back to the remote device 110. The identifier and/or additional information may be ascii data.

As described above with reference to FIG. 3, the remote device 110 may also transmit voice data. In this case, the receiving unit 421 receives the image data and the voice data, and the control unit 423 analyzes the received image data and the received voice data. For example, the decoding unit 422 may decode and convert the voice data to machine language, and the control unit 423 correlates the voice data to a person (such as a customer) and a number (such as a quantity of the object). The control unit 423 also analyzes and processes the image data as described above. Accordingly, the control unit 423 can create an order for the customer based on the received data.

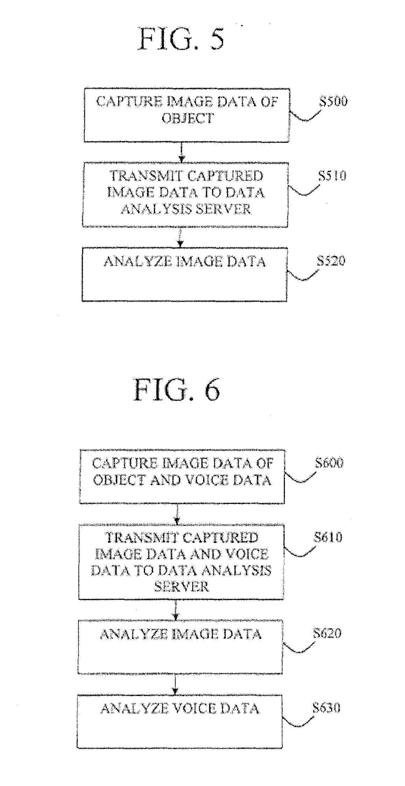

FIG. 5 is a flowchart illustrating a method of collecting and analyzing image data according to an embodiment of the present invention. Referring to FIG. 5, image data of an object is captured by a remote device in operation S500. Then, the captured image data is transmitted from the remote device to a data analysis server in operation S510. The data analysis server analyzes the received image data by performing one or more machine vision functions thereon in operation S520. The analyzing (operation S520) may include identifying a bar code or identifying the object of the image data. Thereafter, the data analysis server may transmit a result of the one or more machine vision functions to the remote device and/or perform a function according to the result of the one or more machine vision functions. For example, the data analysis server may create a customer order for the object identified in the image data by the one or more machine vision functions.

FIG. 6 is a flowchart illustrating a method of collecting and analyzing image data and voice data according to an embodiment of the present invention. Referring to FIG. 6, image data of an object and voice data is captured by a remote device in operation S600. Then, the captured image data and the captured voice data are transmitted from the remote device to a data analysis server in operation S610. The data analysis server analyzes the received image data by performing one or more machine vision functions thereon in operation S620. The analyzing (operation S620) may include identifying a bar code or identifying the object of the image data. Additionally, the data analysis server analyzes the received voice data in operation S630. For example, the data analysis server may convert the voice data to numbers or text. Thereafter, the data analysis server may transmit a result of the one or more machine vision functions and voice analysis to the remote device and/or perform a function according to the result of the one or more machine vision functions and voice analysis. For example, the data analysis server may create a customer order for the object identified in the image data by the one or more machine vision functions for a customer identified by the voice data.

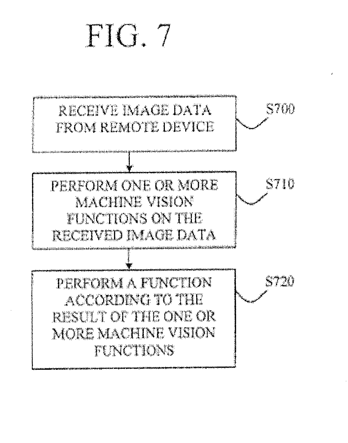

FIG. 7 is a flowchart illustrating a method of analyzing image data according to an embodiment of the present invention. Referring to FIG. 7, a data analysis server receives image data from a remote device in operation S700. Then, the image data is analyzed by performing one or more machine vision functions thereon in operation S710. Thereafter, the data analysis server performs a function according to the result of the one or more machine vision functions in operation S720. For example, the data analysis server may return a machine-readable result of the analysis to the remote device, or create a customer order for the object identified in the image data by the one or more machine vision functions.

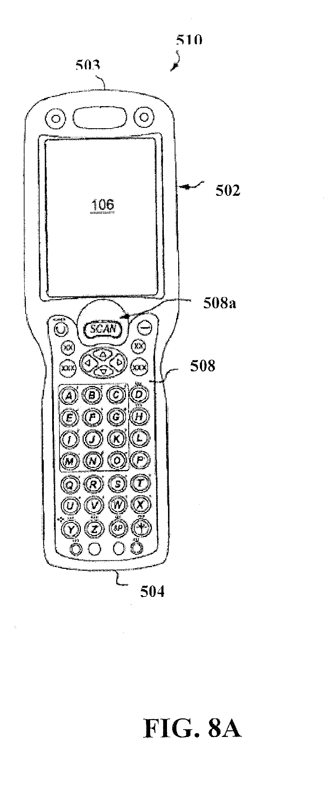

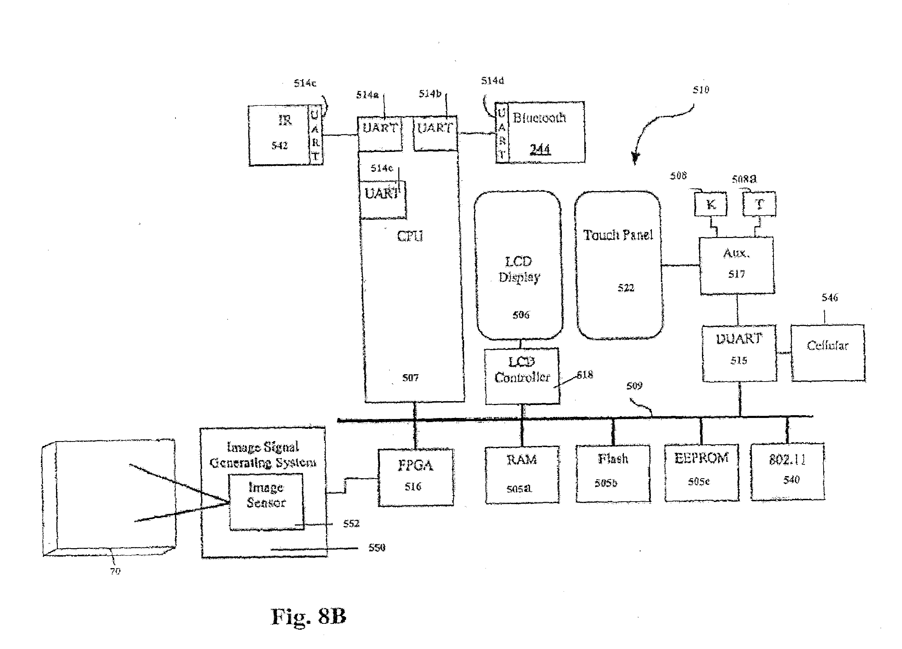

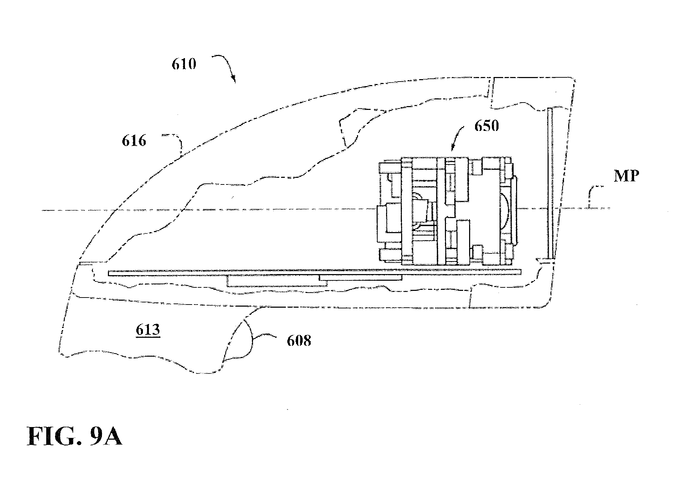

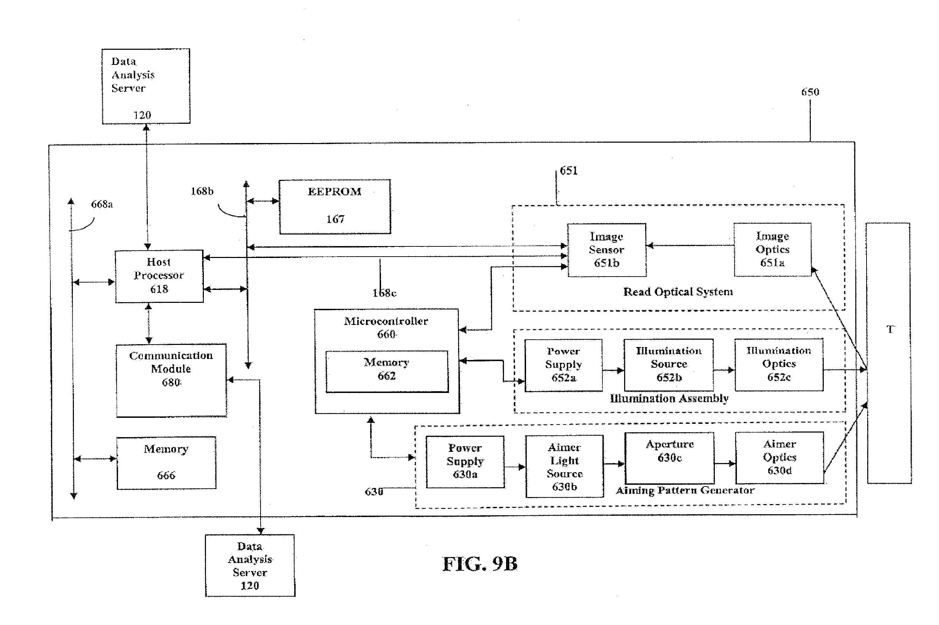

FIGs. 8A through 9B illustrate two types of remote devices 110 according to embodiments of the present invention: PDTs (FIGs. 8A and 8B) and handheld bar code scanners (FIGs. 9A and 9B). When viewed at a systems level, PDTs and handheld bar code scanners illustrate a variety of sub-systems utilized by remote devices. However, while the following discussion focuses on PDTs and handheld bar code scanners, it is understood that aspects of the present invention can be applied to any remote device capable of capturing image data and transmitting the image data as described above with reference to FIGs. 1 through 4.

PDTs generally integrate a mobile computer, one or more data transport paths, and one or more data collection subsystems. The mobile computer portion is generally similar to known touch screen consumer oriented portable computing devices (e.g. "Pocket PCs" or "PDAs"), such as those available from PALM, HEWLETT PACKARD, and DELL. The data transport paths include wired and wireless paths, such as 802.11, IrDA, BLUETOOTH, RS-232, USB, CDMA, GSM (incl. GRPS), and so forth. The data collection subsystem generally includes a device that captures image data from an external source. PDTs further distinguish from consumer oriented portable computing devices through the use of "industrial" components integrated into a housing that provide increased durability, ergonomics, and environmental independence over consumer oriented devices. Additionally, PDTs tend to provide improved battery life by utilizing superior batteries and power management systems. PDTs are available from several sources, including the assignee of the present application: HONEYWELL INTERNATIONAL, INC.

FIG. 8A is a plan view of a PDT 510 according to an embodiment of the present invention. Referring to FIG. 8A, the PDT 510 utilizes an elongated water resistant body 502 supporting a variety of components, including: a battery (not illustrated); a display screen 506 (such as an LCD screen under a touch sensitive panel); a keypad 508 (including a scan button 508a); a scan engine (not illustrated); and a data/charging port (not illustrated). The scan engine includes an image engine and may be located near a top end 503 of the PDT 510. The data/charging port may include a proprietary mechanical interface with one set of pins or pads to transmit and/or to receive data (for example, via a serial interface standard such as USB or RS-232) and a second set of pins or pads to receive power to operate the system and/or to charge the battery. The data charging port may be located near a bottom end 504 of the PDT 510.

In use, the user presses the scan key 508a to initiate an image data capture via the scan engine. The captured image data may be stored and/or displayed on the display screen 506. As described above with reference to FIGs. 1 through 7, additional processing of the data takes place in the data analysis server 120 to which the data is transmitted.

FIG. 8B is a block diagram of a PDT 510 according to an embodiment of the present invention. Referring to FIG. 8B, a central processing unit (CPU) 507 receives data from and outputs data to other sub-systems for storage and transmission. The CPU 507 may include one or more of a number of off-the-shelf solutions including: embedded processors (such as an XSCALE® processor available from MARVELL® TECHNOLOGY GROUP); general purpose processors (such as a PENTIUM® 4 available from INTEL®); or any number of custom solutions including pre-configured field programmable gate arrays (FPGAs) and application specific integrated circuits (ASICs). Overall operation of the CPU 505 is controlled by software or firmware (typically referred to as an operating system) stored in one or more memory locations 505n, such as random access memory (RAM) 505a, flash memory 505b, and electrically erasable programmable read-only memory (EEPROM) 505c. Examples of suitable operating systems for the PDT 510 include graphical user interfaces such as WINDOWS MOBILE®, WINDOWS® CE, WINDOWS® XP, LINUX, PALM®, and OSX operating systems.

In general, communication between the CPU 507 and the various sub-components takes place via one or more ports and/or busses, including a main system bus 509, a plurality of Universal Asynchronous Receiver/Transmitter (UART) ports 514n; and a Dual Universal Asynchronous Receiver/Transmitter (DUART) 515.

A variety of secondary processors may be provided to perform general and application specific functions. By way of example, the embodiment illustrated in FIG. 5B provides three such processors: a field programmable gate array (FPGA) 516; an auxiliary processor 517; and an LCD controller 518. The FPGA 516 may include any number of FPGAs including the Virtex-4 family of FPGAs available from XILINX. The FPGA 516 is used to interface with one or more data acquisition systems as described hereinafter. The auxiliary processor 517 may include any number of embedded (or general purpose) processors, including the PICmicro® family of microcontrollers available from MICROCHIP TECHNOLOGY. The auxiliary processor 517 interfaces with and controls a variety of data input devices including, for example a touch sensitive panel 522, a keypad 508, and a scan key or trigger 508. The LCD controller 518 controls the display of images on an LCD display 506, such as any number of displays available from SHARP.

The PDT 510 further includes one or more transmission units (such as an 802.11 transmission unit 540, an infrared (IR) transmission unit 542, a Bluetooth transmission unit 544, and a cellular transmission unit 546) to transmit captured image data to the data analysis server 120. The 802.11 transmission unit 540 interfaces with the CPU 507 via the main system bus 509. The IR transmission unit 542 and the Bluetooth transmission unit 544 are connected to the CPU 507 via UART channels 514n. The cellular transmission unit 546 is connected to the CPU 507 via the DUART 515. Wired communication may be conducted via a UART, such as the UART 514e.

The PDT 510 is configured to activate a data collection subsystem based, for example, on the actuation of a key on the keypad 508 (including the trigger 508a) or a touch on the touch panel 522. In addition to the touch panel 522 and keyboard 508, an image signal generation system 550 is integrated into the PDT 510. The image signal generation system 550 may be controlled by the main CPU 507 and/or a secondary processor. For example, the image signal generation system 550 is illustrated in FIG. 5B as being controlled by the FPGA 516. Possible configurations of the FPGA 516 are illustrated in United States Patent No. 6,947,612 incorporated herein by reference. According to other aspects, the image signal generation system 550 may be controlled by the CPU 507 via the system bus 509.

The image signal generating system 550 includes a two dimensional solid state image sensor 552 (such as a charge-coupled device (CCD), a complementary metal-oxide-semiconductor (CMOS), or a charge injection device (CID)) to capture the image data (such as an image or a bar code). Two-dimensional solid state image sensors generally have a plurality of photo sensor picture elements ("pixels") that are formed in a pattern including a plurality of rows and a plurality of columns of pixels. The image signal generating system 550 further includes imaging optics (not shown) to focus an image onto an active surface of the image sensor 552. The image sensor 552 may be incorporated into an image sensor integrated circuit (IC) chip having disposed thereon image sensor control circuitry, image signal conditioning circuitry, and an analog-to-digital converter. The FPGA 516 manages the capture and transfer of the image data into memory 505n. Possible configurations of the FPGA 516 are illustrated in United States Patent 6,947,612, incorporated herein by reference. Decoding may be performed by the CPU 507, any suitable secondary processor, or the data analysis server 120. Examples of a suitable image signal generation system 550 include the 5000 2D engine series available from Hand Held Products, assignee of the present application, such as the 5X00 and 5X80 engines.

The image signal generating system 550 (corresponding to the image capturing unit 211 and 311 illustrated in FIGs. 2 and 3, respectively) captures an image of an object 70. Specifically, when the trigger button 508a is actuated, the CPU 507 causes the appropriate control signals to be sent to the image sensor 552. In response thereto, the image sensor 552 generates digital image data including a representation of the object 70. This image data is acquired by the FPGA 516 where it is collected and subsequently transmitted to the data analysis server 120 or an intermediary device that transmits the image data to the data analysis server 120. The image data is transmitted via the 802.11 transmission unit 540, the IR transmission unit 542, the Bluetooth transmission unit 544, and/or the cellular transmission unit 546. The image data may also be transferred to the memory 505n to be stored and/or displayed on the LCD display 506. As described above, the image signal generating system 550 may capture one image, a plurality of images, or video of the object 70. Where a plurality of images are captured, different angles of the object 70 may be captured in each image such that, for example, the data analysis server 120 can choose an image with a best lighting or quality to analyze. Furthermore, the capturing of the image or images may occur automatically in response to a trigger signal being generated by activation of the trigger 508a. For example, the CPU 507 may be configured, typically through execution of a program resident in the memory 505n, to continuously capture images until the trigger 508a is released. The continuous capturing may also be terminated by timing out after a predetermined period of time.

As described above with reference to FIG. 4, the data analysis server 120 receives, decodes, and analyzes the image data to identify the corresponding object 70.

FIG. 9A is a partial cutaway view of a handheld bar code scanner 610 according to an embodiment of the present invention. Referring to FIG. 9A, the handheld bar code scanner 610 (hereinafter, "scanner") includes an imaging reader assembly 650 provided within a head portion or housing 616 connected to a handle portion 613. A trigger 608 is used to control an operation of the scanner 610. The head portion 616 has a medial plane MP so that the scanner 610 is held with the head portion horizontal. The medial plane MP is roughly perpendicular to the face of the head portion 616 as operators have a tendency to hold the medial plane of the head portion of the imager approximately normal to the plane of the target when collecting data.

FIG. 9B is a block diagram of an imaging reader assembly 650 of the scanner of FIG. 6A according to an embodiment of the present invention. Referring to FIG. 9B, the image reader assembly 650 includes a read optical system 651, an illumination assembly 652, an aiming pattern generator 620 and a plurality of control and communication modules. The read optical system 651 generates frames of data containing indications of the intensity of light received by the read optical system 651. The illumination assembly 652 illuminates a target T creating reflections that are received by the read optical system 651. The aiming pattern generator 630 projects an aiming light pattern to assist with aiming the scanner 610. While the present description employs an imager based data collection subsystem (the image reader assembly 650), it is understood the data collection subsystem may take other forms for image capturing (such as a laser scanner).

The read optical system 651 includes imaging optics 651 a and an image sensor 651 b. The imaging optics 651 a receives light reflected from the target T and projects the reflected light onto the image sensor 651 b. The image sensor 651 b generates image data from the received light, and may include one or more two-dimensional solid state image sensors, one or more color solid state image sensors, and/or one or more monochrome solid state image sensors (using such technologies as CCD, CMOS, NMOS, PMOS, CID, CMD, etc.). For example, the image sensor 651 b may include the MT9V022 sensor from Micron Technology Inc. Such a sensor contains an array of light sensitive photodiodes (or pixels) that convert incident light energy into electric charges.

The image sensor 651 b may employ in a full frame (or global) shutter operating mode, wherein the entire imager is reset prior to an image capture operation to remove any residual signal in the photodiodes. The photodiodes (pixels) then accumulate charge for some period of time (exposure period), with the light collection starting and ending at about the same time for all pixels. At the end of the integration period (time during which light is collected), all charges are simultaneously transferred to light shielded areas of the sensor. The light shield prevents further accumulation of charge during the readout process. The signals are then shifted out of the light shielded areas of the sensor and read out.

The illumination assembly 652 includes a power supply 652a, illumination sources 652b, and illumination optics 652c. The illumination optics 652c directs the output of the illumination sources 652b (including LEDs or the like) onto the target T. The light is reflected off the target T and received by the read optical system 651. It is understood that, according to other aspects, the illumination provided by the illumination assembly 652 may be combined with (or replaced by) other sources of illumination, including ambient light, from sources outside of the scanner 610.

The aiming pattern generator 630 includes a power supply 630a, a light source 630b, an aperture 630c, and optics 630d. The aiming pattern generator 630 creates an aiming light pattern projected on or near the target T that spans a portion of the read optical system's 651 operational field of view in order to assist the operator in properly aiming the scanner 610 at a bar code pattern that is to be read. A number of representative generated aiming patterns are possible and not limited to any particular pattern or type of pattern, such as any combination of rectilinear, linear, circular, elliptical, etc., figures, whether continuous or discontinuous (i.e., defined by sets of discrete dots, dashes, and the like). Alternately, the aimer pattern generator 630 may be a laser pattern generator.

A host processor 618 controls overall operations of the image reader assembly 650. The host processor 618 and other components of the image reader assembly are generally connected by one or more buses 668n and/or dedicated communication lines. In the illustrated example, a parallel bus 668a connects the host processor 618 to a main system memory 666 used to store processed (and unprocessed) image data from the image sensor 651 b. The host processor 618 utilizes an I2C bus 668b to communicate exposure settings to the image sensor 651 b and illumination parameters to a microcontroller 660. A dedicated 8 to 10 bit parallel bus 668c is used to transfer the image data from the image sensor 651 b to the host processor 618. The output of the image sensor 651 b is processed by the host processor 618 utilizing, for example, one or more functions or algorithms to condition the signal appropriately for use in further processing by the data analysis server 120.

The microcontroller 660 maintains illumination parameters, used to control operation of the illumination assembly 652 and the aiming pattern generator 630, in a memory 662. For example, the memory 162 may include tables indicative of power settings for the power supplies 652a and 630a corresponding to various states of the signal from the image sensor 651 b. Based upon signals from the host processor 618 and/or the image sensor 651 b, the microcontroller 660 sends signals to the power supplies 652a and 630a according to values stored in the table in the memory 662.

The image reader assembly 650 further includes one or more communication modules 680 to transmit the image data to the data analysis server 120 or an intermediary device that transmits the image data to the data analysis server 120, as described above. The one or more communication modules 680 may transmit the image data through a wired (such as UART, USB, serial, parallel, scan wedge, or Ethernet) and/or wireless (such as IrDA, BLUETOOTH, GSM, GPRS, EDGE, and 802.11) transmission method and may also be integrated with the host processor 618.

The data analysis server 120 receives, decodes, and analyzes the image data to identify the corresponding object T.

As described above, according to aspects of the present invention, complex image data of an object may be collected by a remote image capturing device in order to identify the object by analyzing the image data in a separate server. Furthermore, according to aspects of the present invention, image data of an object may be captured with voice data by a remote image capturing device in order to identify the object and process the object according to the voice data by analyzing the image data and voice data in a separate server.

Aspects of the present invention can also be embodied as computer-readable codes on a computer-readable recording medium. Also, codes and code segments to accomplish the present invention can be easily construed by programmers skilled in the art to which the present invention pertains. The computer-readable recording medium is any data storage device that can store data which can be thereafter read by a computer system or computer code processing apparatus. Examples of the computer-readable recording medium include read-only memory (ROM), random-access memory (RAM), CD-ROMs, magnetic tapes, floppy disks, and optical data storage devices. The computer-readable recording medium can also be distributed over network-coupled computer systems so that the computer-readable code is stored and executed in a distributed fashion. Aspects of the present invention may also be realized as a data signal embodied in a carrier wave and comprising a program readable by a computer and transmittable over the Internet.

Although a few embodiments of the present invention have been shown and described, it would be appreciated by those skilled in the art that changes may be made in this embodiment without departing from the principles and spirit of the invention, the scope of which is defined in the claims and their equivalents.

## Claims

1. A data analysis server to analyze image data of an object captured by a mobile device, the data analysis server comprising:
a receiving unit to receive the image data from the mobile device; and
a control unit to analyze the received image data by performing one or more machine vision functions on the received image data, and to control a transmitting of a result of the one or more machine vision functions to the mobile device and/or a performing of a function according to the result of the one or more machine vision functions.

2. The data analysis server as claimed in claim 1, wherein:
the image data is a plurality of images of the object or a video of the object; and
the control unit determines an image of the plurality of images or of the video having a best angle for analysis and/or a best quality for analysis, and performs the one or more machine vision functions on the determined image.

3. The data analysis server as claimed in claim 1, further comprising a transmitting unit to transmit the result of the one or more machine vision functions to the mobile device.

4. The data analysis server as claimed in claim 1, further comprising a storage unit to store a reference database comprising one or more predetermined reference images of corresponding objects and information for each object,
wherein the control unit analyzes the image data by comparing the image data against the reference database to find a matching reference image and the information of the corresponding object, and the information comprises an identifier of the corresponding object and/or dimensions of the corresponding object.

5. A method of analyzing image data of an object captured by a mobile device, the method comprising:
receiving the image data from the mobile device;
analyzing the received image data by performing one or more machine vision functions on the received image data; and
transmitting a result of the one or more machine vision functions to the mobile device and/or performing a function according to the result of the one or more machine vision functions.

6. The method as claimed in claim 5, wherein:
the image data is a plurality of images of the object or a video of the object; and
the analyzing of the transmitted image data comprises determining an image of the plurality of images or of the video having a best angle for analysis and/or a best quality for analysis, and performing the one or more machine vision functions on the determined image.

7. The method as claimed in claim 5, wherein:
the analyzing of the transmitted image data comprises comparing the image data against a reference database comprising one or more predetermined reference images of corresponding objects and information for each object, and determining a reference image that matches the image data; and
the information comprises an identifier of the corresponding object and/or dimensions of the corresponding object.

8. The method as claimed in claim 5, wherein the analyzing comprises performing a barcode reading function, an optical character recognition function, a dimensioning function, and/or an image identifying function.

9. The method as claimed in claim 5, further comprising:
capturing voice data in the end unit;
transmitting the voice data to the data analysis server;
analyzing the transmitted voice data in the data analysis server; and
creating an order for the object, determined by the one or more machine vision functions, based on the received voice data.

10. A system to capture and analyze image data of an object, the system comprising:
an end unit to capture the image data, the end unit comprising:
an image capturing unit to capture the image data of the object, and
a transmitting unit to transmit the captured image data; and
a data analysis server to analyze the image data, the data analysis server comprising:
a receiving unit to receive the transmitted image data, and
a control unit to analyze the received image data by performing one or more machine vision functions on the received image data, and to control a transmitting of a result of the one or more machine vision functions to the end unit and/or a performing of a function according to the result of the one or more machine vision functions.

11. The system as claimed in claim 10, wherein the image data is a plurality of images of the object or a video of the object and wherein the control unit determines an image of the plurality of images or of the video having a best angle for analysis and/or a best quality for analysis, and performs the one or more machine vision functions on the determined image.

12. The system as claimed in claim 10, wherein:
the data analysis server further comprises a storage unit to store a reference database;
the reference database comprises one or more predetermined reference images of corresponding objects and information for each object;
the control unit analyzes the image data by comparing the image data against the reference database to find a matching reference image and the information of the corresponding object; and
the information comprises an identifier of the corresponding object and/or dimensions of the corresponding object.

13. The server as claimed in claim 1 or the system as claimed in claim 11 further comprising a decoding unit to convert the image data to machine language.

14. The system as claimed in claim 11, wherein:
the end unit further comprises a voice capturing unit to capture voice data;
the transmitting unit transmits the voice data to the data analysis server;
the control unit analyzes the received voice data; and
wherein the control unit controls the performing of the function according to the received voice data.

15. The system as claimed in claim 14, wherein the control unit creates an order for the object, determined according to the one or more machine vision functions, based on the received voice data.
